# EUROPÄISCHE PATENTSCHRIFT

(11) **EP 2 992 978 B1**
(45) Veröffentlichungstag und Bekanntmachung des Hinweises auf die Patenterteilung: **19.10.2016**
(21) Anmeldenummer: 15176682.1
(22) Anmeldetag: 14.07.2015
(51) Int. Cl.: B21J 13/02, B21K 1/44, B21C 3/12, B21C 25/02, B21J 13/03, B23P 15/24, B30B 15/02

(54) **MATRIZENMODULSATZ FÜR PRESSWERKZEUGE ZUM HERSTELLEN VON SCHRAUBEN**
DIE MODULE SET FOR PRESSING TOOLS FOR PRODUCING SCREWS
ENSEMBLE DE MATRICES MODULAIRES POUR OUTILS DE PRESSE DESTINÉS À FABRIQUER DES VIS

(30) Priorität: 18.08.2014 DE 102014111724
(43) Veröffentlichungstag der Anmeldung: 09.03.2016
(73) Patentinhaber: KAMAX Holding GmbH & Co. KG, 35315 Homberg (Ohm) (DE)
(72) Erfinder: Gensert, Hilmar, 04849 Bad Düben (DE)
(74) Vertreter: REHBERG HÜPPE + PARTNER

(56) Entgegenhaltungen:
- EP-A2- 2 036 632
- DE-A1- 10 346 265
- DE-A1- 19 624 004
- DE-C1- 4 108 407
- JP-A- 2011 218 419

## Beschreibung

### TECHNISCHES GEBIET DER ERFINDUNG

Die Erfindung betrifft ein Presswerkzeug zum Herstellen von Bauteilen durch Umformung und insbesondere durch Kaltumformung. Das Presswerkzeug weist eine Matrize und einen Stempel auf. Bei den Bauteilen handelt es sich insbesondere um Schrauben, Gewindebolzen, Kugelbolzen und andere im Wesentlichen rotationssymmetrische Bauteile, insbesondere aus Metall.

Zunächst wird von einem Ausgangsmaterial - dem so genannten Draht - ein Abschnitt abgetrennt und dem Presswerkzeug der Presse zugeführt. Dieser Abschnitt wird dann durch Betätigung des Stempels in die Matrize gepresst und dabei umgeformt, z. B. zur Erzeugung eines Kopfs oder eines Schafts. Das dadurch entstehende Werkstück wird auch als Rohling bezeichnet und anschließend weiter bearbeitet. So können bestimmte Außenkonturen - und insbesondere Gewindeabschnitte, Wendel, Rändel und andere Profilierungen - z. B. durch Rollen erzeugt werden.

Um die in der Matrize entstehenden hohen Kräfte besser aufnehmen zu können, ist die Matrize armiert. Dies bedeutet, dass die Matrize einen inneren Kern und einen diesen umgebenden Armierungsring aufweist.

### STAND DER TECHNIK

Im Stand der Technik sind allgemein Matrizen für Presswerkzeuge bekannt. Die jeweilige Matrize besteht aus einem Kern und einem Armierungsring oder zwei aufeinandergesetzten

Armierungsringen. Der Außendurchmesser der Matrize und somit des äußersten Armierungsrings wird durch die entsprechende Aufnahme der Presse vorgegeben, in die die Matrize eingesetzt wird. Der Innendurchmesser wird durch das zu pressende Werkstück vorgegeben. In Abhängigkeit von der Differenz des Außendurchmessers des Kerns und den Abmaßen der Aufnahme der Presse wird dann vom Werkzeugkonstrukteur in engen Grenzen festgelegt, ob ein Armierungsring oder zwei Armierungsringe benutzt werden.

Matrizen für Presswerkzeuge sind aus der deutschen Patentanmeldung DE 196 24 004 A1 und der japanischen Patentanmeldung JP 2011-218419 A bekannt. Die Matrize besteht dabei aus einem Kern und einem Armierungsring.

### AUFGABE DER ERFINDUNG

Der Erfindung liegt die Aufgabe zugrunde, unterschiedliche Matrizen für Presswerkzeuge zur Herstellung unterschiedlicher Werkstücke schneller und flexibler herstellen zu können.

### LÖSUNG

Die Aufgabe der Erfindung wird erfindungsgemäß mit den Merkmalen des unabhängigen Patentanspruchs 1 gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft einen Matrizenmodulsatz für ein Presswerkzeug mit zwei unterschiedlichen Kernen und zwei unterschiedlichen Armierungsringen, die so aufeinander abgestimmt ausgebildet sind, dass aus ihnen eine erste Matrize mit einem Kern und den Armierungsringen oder alternativ eine zweite Matrize mit dem anderen Kern und nur einem der Armierungsringe zusammenfügbar ist.

Die Erfindung betrifft weiterhin ein Matrizenmodulsatzset für ein Presswerkzeug. Das Matrizenmodulsatzset weist einen ersten oberhalb beschriebenen Matrizenmodulsatz und einen zweiten oberhalb beschriebenen Matrizenmodulsatz auf. Dabei sind die Kerne und die Armierungsringe des zweiten Matrizenmodulsatzes unterschiedlich zu den Kernen und Armierungsringen des ersten Matrizenmodulsatzes ausgebildet.

### Definitionen

Unter dem Kern ist das radial innere Bauelement der Matrize zu verstehen, welches das in der Matrize umzuformende Bauteil umgibt, kontaktiert und seine Geometrie bestimmt. Der Begriff "Kern" besagt nicht, dass dieser im Querschnitt gesehen mittig Material aufweist. Vielmehr ist dort zur Aufnahme des umzuformenden Werkstücks gerade kein Material, sondern Luft vorhanden. Der Begriff "Kern" ist auf den Aufbau der Matrize bezogen und soll relativ zu den anderen Modulen - nämlich den Armierungsringen - besagen, dass dieser in der Querschnittsansicht radial innen angeordnet ist.

Wenn der Kern in axialer Richtung geteilt ist und sich somit in dieser Richtung aus unterschiedlichen Segmenten zusammensetzt, wird dies im Rahmen der Definition der vorliegenden Erfindung nur als ein Kern verstanden. Entsprechendes gilt auch für die Armierungsringe. Ein axial geteilter Armierungsring ist somit nicht als zwei Armierungsringe anzusehen.

Der Begriff Armierungs-"ring" besagt, dass dieser - so wie der Kern - in der Querschnittsansicht radial innen kein Material aufweist, d. h. hohl ist. Der Begriff "Ring" gibt aber nicht an, dass er in axialer Richtung nur eine geringe Erstreckung besitzt. Der Begriff "Ring" stellt also keine Abgrenzung zu dem Begriff "Rohr" oder "Rohrabschnitt" dar.

### Weitere Beschreibung

Erfindungsgemäß wird also ein Modulsatz bereitgestellt, aus dem unterschiedliche Matrizen für ein Presswerkzeug zusammengesetzt werden können. Die im Stand der Technik bekannte Einzelanfertigung einer Matrize zur Anpassung an das jeweilige umzuformende Werkstück und die Aufnahme der Presse wird also durch ein modulares Baukastensystem ersetzt. Aus diesem Baukasten lassen sich flexibel und schnell verschiedene Matrizen zusammensetzen.

Die unterschiedlichen Kerne und die unterschiedlichen Armierungsringe sind Teil des Matrizenmodulsatzes und werden selbst auch als Module bezeichnet. Der Modulsatz ist so aufgebaut, dass aus ihm mindestens zwei verschiedene Matrizen zusammenfügbar sind. Er kann aber auch so aufgebaut sein, dass eine größere Mehrzahl unterschiedlicher und ggf. auch gleicher Matrizen aus ihm zusammenfügbar ist, insbesondere drei, vier, fünf, sechs oder mehr Matrizen. Hierfür kann der Modulsatz eine Mehrzahl übereinstimmender Armierungsringe - insbesondere vergleichsweise größerer Armierungsringe - aufweisen, die dann in Kombination mit unterschiedlichen Kernen zur Bildung mehrerer unterschiedlicher Matrizen aus einem Modulsatz benutzt werden können.

Der Kern wird durch mindestens einen Armierungsring in radialer Richtung ummantelt und mit diesem vorgespannt. Die Vorspannung entsteht durch eine Presspassung zwischen dem Kern und dem Armierungsring - d. h. zwischen dem Außendurchmesser des Kerns und dem Innendurchmesser des Armierungsrings. Je mehr Vorspannung in den Kern eingebracht wird, desto höher kann dieser beim Umformvorgang belastet werden.

Die Module sind bezüglich ihrer Innendurchmesser und Außendurchmesser so aufeinander abgestimmt dimensioniert, dass unterschiedliche Matrizen aus ihnen zusammengesetzt werden können. Unter einer unterschiedlichen Matrize ist dabei insbesondere eine Matrize zu verstehen, die einen anderen Kern als eine andere Matrize aufweist. So kann der Kern der ersten Matrize mit einem vergleichsweise kleineren Innendurchmesser und einem vergleichsweise kleineren Außendurchmesser durch einen Kern einer zweiten Matrize mit einem vergleichsweise größeren Innendurchmesser ersetzt werden. Damit die erforderliche Mindestdicke des Kerns eingehalten wird, ist auch der Außendurchmesser vergrößert. Daher entfällt bei der zweiten Matrize der Armierungsring, der den gleichen Außendurchmesser wie der Kern der zweiten Matrize besitzt. Anders gesagt werden also der erste Kern und der darauf folgende innerste Armierungsring der ersten Matrize durch einen zweiten Kern der zweiten Matrize ersetzt. Der zweite Armierungsring der ersten Matrize wird dann als erster Armierungsring der zweiten Matrize identisch benutzt. Dieses Baukastensystem kann entsprechend auch für eine dritte, vierte, fünfte, sechste usw. Matrize fortgesetzt werden.

Der Matrizenmodulsatz kann insbesondere einen ersten Kern, einen zweiten Kern, einen ersten Armierungsring und einen zweiten Armierungsring aufweisen. Der erste Kern weist einen ersten Innendurchmesser und einen ersten Außendurchmesser auf. Der zweite Kern weist einen zweiten Innendurchmesser und einen zweiten Außendurchmesser auf. Der zweite Außendurchmesser des zweiten Kerns ist größer als der erste Außendurchmesser des ersten Kerns. Der erste Armierungsring weist einen dritten Innendurchmesser und einen dritten Außendurchmesser auf. Der dritte Außendurchmesser des ersten Armierungskerns ist gleich dem zweiten Außendurchmesser des zweiten Kerns. Der zweite Armierungsring weist einen vierten Innendurchmesser und einen vierten Außendurchmesser auf. Der erste Außendurchmesser des ersten Kerns und der dritte Innendurchmesser des ersten Armierungsrings sowie der dritte Außendurchmesser des ersten Armierungsrings und der vierte Innendurchmesser des zweiten Armierungsrings sind so aufeinander abgestimmt, dass die erste Matrize mit dem ersten Kern, dem ersten Armierungsring und dem zweiten Armierungsring zusammenfügbar ist. Der zweite Außendurchmesser des zweiten Kerns und der vierte Innendurchmesser des zweiten Armierungsrings sind so aufeinander abgestimmt, dass alternativ die zweite Matrize mit dem zweiten Kern und dem zweiten Armierungsring, aber ohne den ersten Armierungsring zusammenfügbar ist.

Der zweite Innendurchmesser des zweiten Kerns kann also größer als der erste Innendurchmesser des ersten Kerns sein. Es ist aber auch möglich, dass der erste und der zweite Kern einen übereinstimmenden Innendurchmesser besitzen oder der zweite Innendurchmesser des zweiten Kerns kleiner ist als der erste Innendurchmesser des ersten Kerns. Die Kerne können sich also durch ihre Innendurchmesser und/oder Außendurchmesser unterscheiden.

Der Außendurchmesser eines Kerns und der Innendurchmesser eines Armierungsrings können so aufeinander abgestimmt sind, dass sie zur Bildung einer Presspassung miteinander verbindbar sind. Alternativ oder zusätzlich können der Außendurchmesser eines Armierungsrings und der Innendurchmesser eines anderen Armierungsrings so aufeinander abgestimmt sind, dass sie zur Bildung einer Presspassung miteinander verbindbar sind. In dieser Weise wird eine Matrize aus den Modulen zusammengesetzt, die zur Aufnahme der beim Pressvorgang im Presswerkzeug entstehenden erheblichen Kräfte geeignet ist.

Die Dicke der Armierungsringe kann mit ihrem Innendurchmesser und/oder Außendurchmesser ansteigen. Das Verhältnis der Dicke zum Innendurchmesser der Armierungsringe kann zwischen etwa 5 und 25 %, insbesondere zwischen etwa 10 und 20 % und vorzugsweise bei etwa 15 % liegen. Durch ein derartiges Verhältnis wird sichergestellt, dass die Armierungsringe einerseits die gewünschte Armierungswirkung bereitstellen, andererseits aber der gewünschte flexible Aufbau des Modulsatzes erreicht wird.

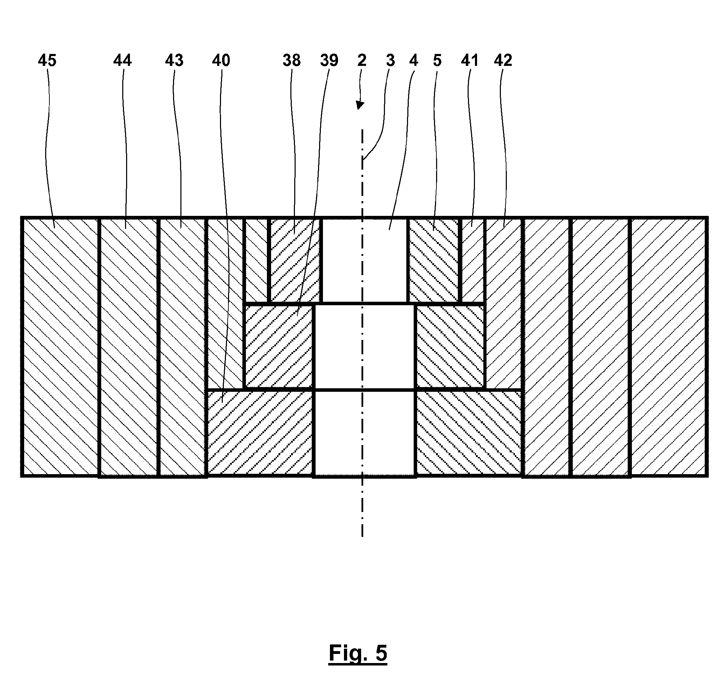

Die Kerne können mehrere in axialer Richtung geteilte Segmente aufweisen. Wie bereits oberhalb ausgeführt wurde, handelt es sich bei derartigen Segmenten nicht um separate Kerne. Vielmehr ist in diesem Fall ein Kern in mehrere Segmente aufgeteilt. Diese Segmente können unterschiedliche Innendurchmesser und/oder unterschiedliche Außendurchmesser aufweisen (siehe insbesondere die später beschriebene Fig. 5). In einem solchen Fall ist also nicht nur der jeweilige Kern in axialer Richtung in mehrere Segmente unterteilt, sondern aufgrund der unterschiedlichen Außendurchmesser dieser Segmente sind auch Armierungsringe in der Form von Füllringen vorhanden. Diese Füllringe gleichen die Außendurchmesserunterschiede zwischen den verschiedenen Segmenten des Kerns so aus, dass sich in radialer Richtung nach außen nach den Füllringen ein vollständiger Armierungsring anschließen kann.

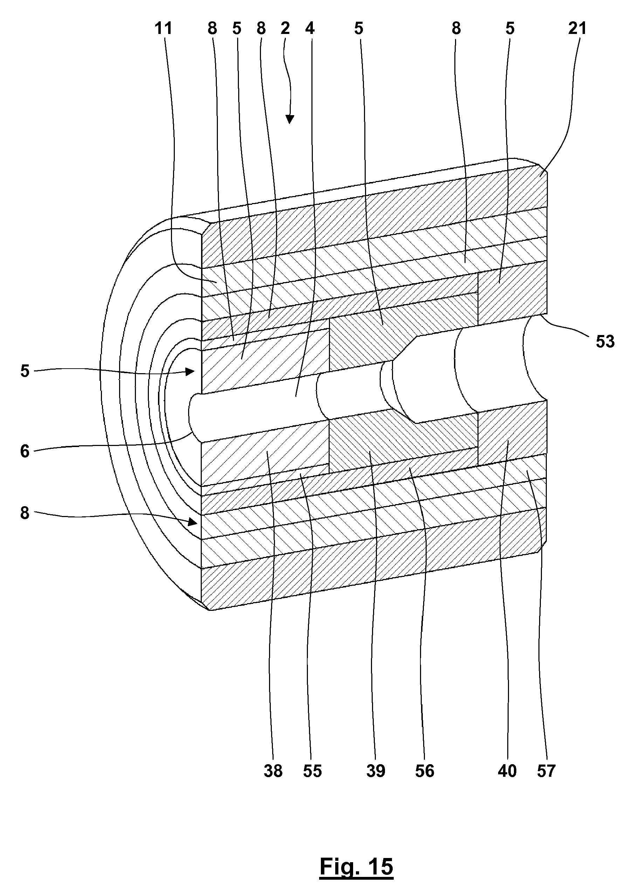

Die Segmente der Kerne und/oder der Armierungsringe, die dann einen Kern bzw. einen Armierungsring in einer montierten Matrize bilden, können aber auch ganz oder teilweise übereinstimmende Innendurchmesser und/oder Außendurchmesser aufweisen. So kann z. B. ein Segment zur Herstellung eines Schaftabschnitts, das folgende Segment zur Herstellung des sich anschließenden Schaftabschnitts und eines Kopfabschnitts und das folgende Segment zur Herstellung des sich anschließenden Kopfabschnitts dienen (vgl. Fig. 15).

Der Matrizenmodulsatz kann mindestens drei unterschiedliche Kerne und drei unterschiedliche Armierungsringe aufweisen. Hierdurch lassen sich bereits drei unterschiedliche Matrizen zusammenfügen. Der Matrizenmodulsatz kann aber auch vier, fünf, sechs oder mehr unterschiedliche Kerne und vier, fünf, sechs oder mehr unterschiedliche Armierungsringe aufweisen.

Die mindestens drei Kerne können unterschiedliche Innendurchmesser und/oder unterschiedliche Außendurchmesser aufweisen. Die mindestens drei Armierungsringe können unterschiedliche Innendurchmesser und unterschiedliche Außendurchmesser aufweisen. Durch die unterschiedlichen Innendurchmesser der Kerne können unterschiedliche Werkstücke hergestellt werden. Die unterschiedlichen Außendurchmesser stellen alternativ oder zusätzlich sicher, dass die erforderliche Wandstärke der Kerne erhalten bleibt. Die Innendurchmesser der Armierungsringe sind auf die Außendurchmesser der Kerne abgestimmt. Die Außendurchmesser der Armierungsringe sind einerseits so gewählt, dass sie auf die Innendurchmesser des sich jeweils in radialer Richtung nach außen anschließenden Armierungsrings angepasst sind und andererseits die erforderliche Wandstärke bzw. Dicke der Armierungsringe gewährleistet ist.

Die Matrizen können Kaltfließpresswerkzeugmatrizen einer maschinenangetriebenen Presse sein. Bei der Presse kann es sich um eine Einstufenpresse oder auch eine Mehrstufenpresse handeln.

Die Matrizen können zum Herstellen von Schrauben ausgebildet sein. Sie dienen dann zum Umformen eines Drahtabschnitts zu einem Rohling bzw. der weiteren Umformung des Rohlings. Diese Umformschritte erfolgen insbesondere vor dem Aufbringen des Gewindeabschnitts der Schraube durch Rollen.

Die Erfindung betrifft weiterhin ein Matrizenmodulsatzset für ein Presswerkzeug. Das Matrizenmodulsatzset weist einen ersten oberhalb beschriebenen Matrizenmodulsatz und einen zweiten oberhalb beschriebenen Matrizenmodulsatz auf. Dabei sind die Kerne und die Armierungsringe des zweiten Matrizenmodulsatzes unterschiedlich zu den Kernen und Armierungsringen des ersten Matrizenmodulsatzes ausgebildet. Die beiden - oder auch mehr als zwei - Matrizenmodulsätze bilden also ein gemeinsames Matrizenmodulsatzset.

Dabei können die Kerne und die Armierungsringe des zweiten Matrizenmodulsatzes andere Außendurchmesser als die Kerne und Armierungsringe des ersten Matrizenmodulsatzes aufweisen. Alternativ oder zusätzlich können die Kerne und die Armierungsringe des zweiten Matrizenmodulsatzes andere Innendurchmesser als die Kerne und Armierungsringe des ersten Matrizenmodulsatzes aufweisen. Es kann auch noch ein dritter, vierter, fünfter, sechster oder weiterer Matrizenmodulsatz entsprechend vorhanden sein.

Die mehreren in einem Set kombinierten unterschiedlichen Matrizenmodulsätze haben zum Ziel, aus diesem eine Matrize für viele unterschiedliche Kerne zusammenfügen zu können. Um die Module bearbeiten und ineinander verpressen zu können, müssen diese eine gewisse Mindestdicke bzw. Mindestwandstärke besitzen. Durch diese Mindestwandstärke werden Mindestdurchmessersprünge definiert. Wenn ein neuer Kern in den Modulsatz integriert werden soll, der aufgrund eines vergrößerten Innendurchmessers und der einzuhaltenden Mindestdicke auch einen vergrößerten Mindestaußendurchmesser besitzt, der größer ist, als der in den ersten Matrizenmodulsatz passende Außendurchmesser, muss dieser Außendurchmesser nicht bis zum nächsten Durchmessersprung des ersten Matrizenmodulsatzes, sondern nur zum weniger weit entfernten Durchmessersprung des zweiten Matrizenmodulsatzes vergrößert werden. Gleichzeitig ist zu beachten, dass die Wandstärke der Kerne auch eine Obergrenze besitzt. Oberhalb dieser Obergrenze ist die Armierung nicht mehr wirksam, da die erforderlichen Vorspannkräfte nicht mehr aufgebracht werden können.

Die in dem Set enthaltenen Modulsätze sind insbesondere so aufeinander abgestimmt, dass die Durchmessersprünge bei zwei Modulsätzen in etwa mittig zueinander versetzt liegen. Bei drei Modulsätzen liegt der Versatz etwa bei 1/3, bei vier Modulsätzen etwa bei 1/4, bei fünf Modulsätzen etwa bei 1/5 usw.

Mit den neuen Modulen können alle erforderlichen Durchmesser und Längen von Matrizen zusammengefügt werden. Um die gewünschte Flexibilität auch bei der Länge zu erhalten, können vergleichsweise lange Kernrohre und Armierungsrohre gelagert werden, von denen dann der jeweils benötigte Abschnitt zur Bildung der gewünschten Kerne und Armierungsringe abgetrennt wird. Diese Rohre können dabei insbesondere bereits in vergüteter Form gelagert werden.

Der Außendurchmesser der Matrize und somit des radial äußersten Armierungsrings wird durch die Aufnahme in der Presse bestimmt. Wenn die für die Aufnahme erforderliche Geometrie von der Geometrie der Armierungsringe abweicht, wird der äußerste Armierungsring entsprechend nachbearbeitet, nachdem die Matrize vollständig zusammengefügt wurde.

Die Innengeometrie der Kerne definiert die Außengeometrie des durch Pressen zu bearbeitenden Werkstücks und kann daher unterschiedlich ausgebildet sein. Es kann sich beispielsweise um eine zylindrische oder konische Bohrung handeln. In Abhängigkeit von der Größe des Innendurchmessers wird diese Geometrie insbesondere durch Drehen, Schleifen oder Senkerodieren hergestellt.

Um diese Bearbeitung zu vereinfachen und auch den axial mittleren Bereich des jeweiligen Moduls erreichen zu können, kann dieses Modul in mehrere axiale Segmente unterteilt werden, wie dies oberhalb beschriebe wurde.

Die Kerne können aus Stahl, insbesondere aus vergütetem Stahl und vorzugsweise aus Hartmetall bestehen. Die Armierungsringe können insbesondere aus vergütetem Stahl oder Faserverbundwerkstoffen, z. B. Kohlefaserverbundwerkstoffen, bestehen.

Die Module sind vorzugsweise als geschlossene ringförmige Elemente ausgebildet. Sie sind in dieser Richtung also nicht geteilt, so dass sie die beim Umformvorgang entstehenden Kräfte gut aufnehmen können.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Kern die Rede ist, ist dies so zu verstehen, dass genau ein Kern, zwei Kerne oder mehr Kerne vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

In den Patentansprüchen sind die Bezugszeichen lediglich für eine der mehreren beispielhaften Ausführungsformen angegeben. So sind die unterschiedlichen Kerne mit den Bezugszeichen 5 und 14 versehen. Es kann sich bei diesen Kernen aber auch um andere Kerne, wie beispielsweise die Kerne 14 und 18 oder 18 und 19 handeln. Entsprechendes gilt für die Armierungsringe.

Teilweise sind bestimmte Bauteile von Ausführungsformen in den Zeichnungen nicht mit Bezugszeichen versehen. Dies führt z. B. dazu, dass in einem Patentanspruch von drei Außendurchmessern die Rede ist, dort aber nur zwei Bezugszeichen angegeben sind. Dies bedeutet nicht, dass nur zwei unterschiedliche Außendurchmesser vorhanden sind, sondern der dritte Außendurchmesser kein Bezugszeichen besitzt.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Längsschnitt gemäß Linie I-I in Fig. 9 und 11 durch eine erste beispielhafte Ausführungsform einer aus mehreren Modulen zusammengesetzten Matrize.
- **Fig. 2**: zeigt einen Längsschnitt gemäß Linie II-II in Fig. 10 und 12 durch eine zweite beispielhafte Ausführungsform einer aus mehreren Modulen zusammengesetzten Matrize.
- **Fig. 3**: zeigt einen Längsschnitt durch eine erste beispielhafte Ausführungsform eines Matrizenmodulsatzes.
- **Fig. 4**: zeigt einen Längsschnitt durch eine erste beispielhafte Ausführungsform eines Matrizenmodulsatzsets mit zwei Matrizenmodulsätzen.
- **Fig. 5**: zeigt einen Längsschnitt durch eine weitere beispielhafte Ausführungsform einer aus Modulen zusammengesetzten Matrize.
- **Fig. 6**: zeigt einen Längsschnitt durch eine weitere beispielhafte Ausführungsform einer aus Modulen zusammengesetzten Matrize.
- **Fig. 7**: zeigt einen Querschnitt gemäß Linie VII-VII in Fig. 9 durch die erste Ausführungsform der Matrize.
- **Fig. 8**: zeigt einen Querschnitt gemäß Linie VIII-VIII in Fig. 10 durch die zweite beispielhafte Ausführungsform der Matrize.
- **Fig. 9**: zeigt eine Seitenansicht der ersten Ausführungsform der Matrize.
- **Fig. 10**: zeigt eine Seitenansicht der zweiten Ausführungsform der Matrize.
- **Fig. 11**: zeigt eine Ansicht einer Stirnseite der ersten Ausführungsform der Matrize.
- **Fig. 12**: zeigt eine Ansicht einer Stirnseite der zweiten Ausführungsform der Matrize.
- **Fig. 13**: zeigt einen Längsschnitt durch eine weitere beispielhafte Ausführungsform einer aus mehreren Modulen zusammengesetzten Matrize.
- **Fig. 14**: zeigt einen Längsschnitt durch eine weitere beispielhafte Ausführungsform einer aus mehreren Modulen zusammengesetzten Matrize.
- **Fig. 15**: zeigt eine perspektivische Ansicht eines Längsschnitts durch eine weitere beispielhafte Ausführungsform einer aus Modulen zusammengesetzten Matrize.

### FIGURENBESCHREIBUNG

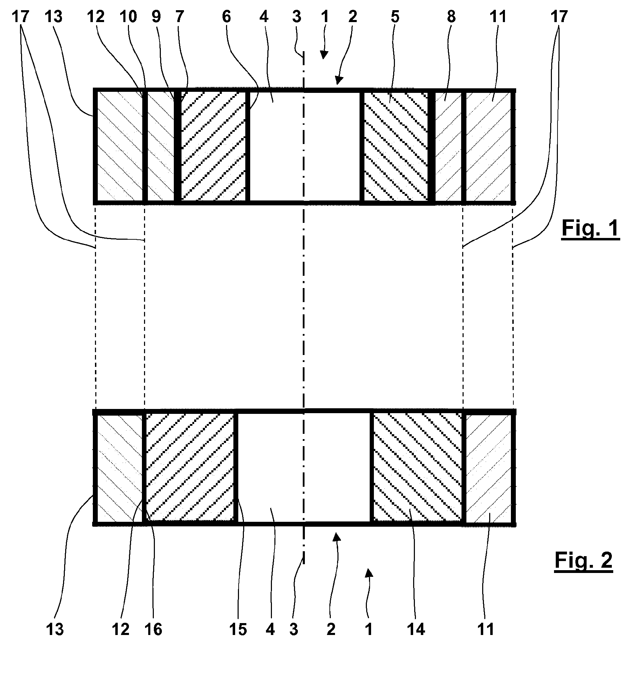

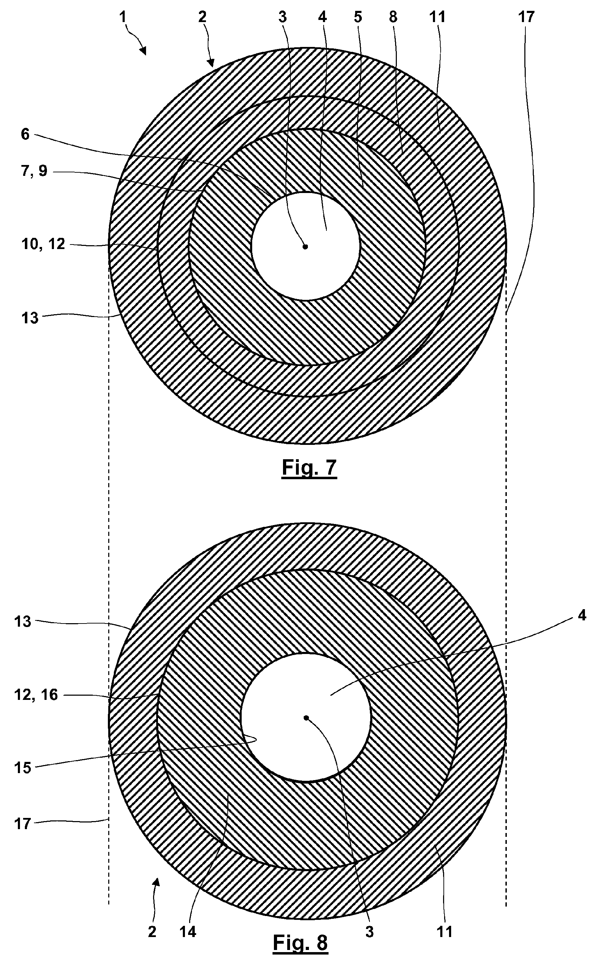

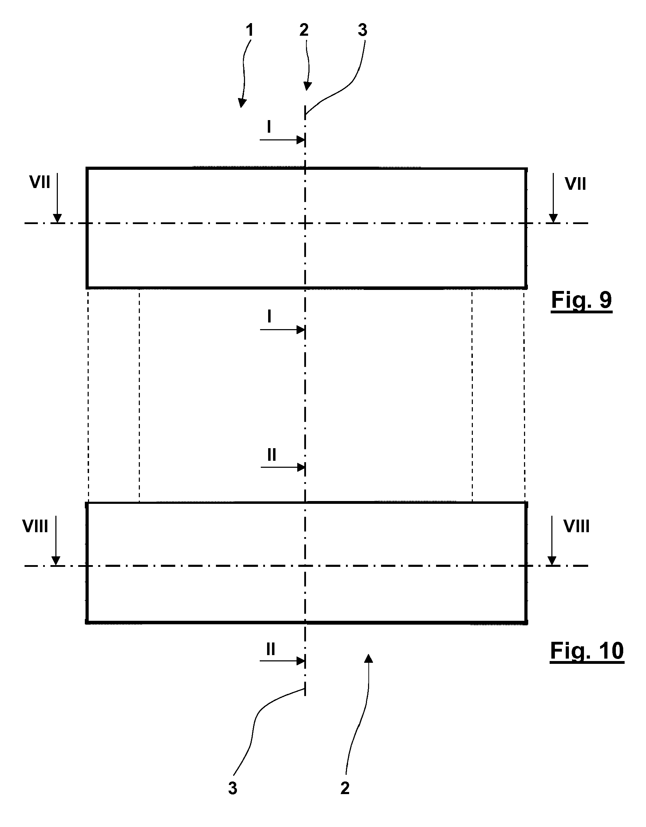

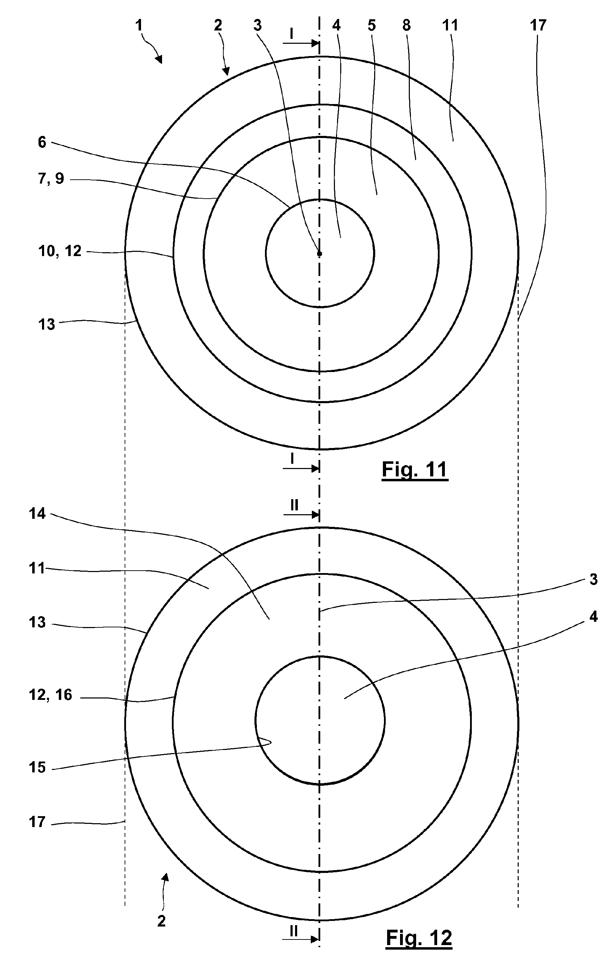

**Fig. 1, 2** und **7****,** **8** und **9****,** **10** und **11, 12** zeigen gemeinsam eine erste beispielhafte Ausführungsform eines neuen Matrizenmodulsatzes 1 für ein Presswerkzeug. Der Matrizenmodulsatz 1 weist eine Mehrzahl von Modulen auf. Ein Teil dieser Module ist zur Bildung einer ersten Matrize 2 zusammengefügt und in Fig. 1, 7, 9 und 11 dargestellt. In Fig. 2, 8, 10 und 12 ist eine andere Matrize 2 dargestellt, die aus einem Teil der Module alternativ zusammengefügt werden kann.

Wie in den Figuren erkennbar ist, handelt es sich bei den Modulen um in radialer Richtung aufeinander aufgesetzte Ringe. Diese besitzen innen einen kreisförmigen Querschnitt. Dieser erstreckt sich in der Längsrichtung zylindrisch weiter, könnte aber auch konisch oder anders ausgebildet sein. Entsprechendes gilt auch für die Außengeometrie. Diese könnte aber auch eine unrunde Gestalt besitzen und insbesondere an die Aufnahme der Presse angepasst sein.

Symmetrisch zur Längsachse 3 weist die Matrize 2 eine Bohrung 4 auf, die die Geometrie des mittels der Matrize 2 durch Kaltumformung herzustellenden Werkstücks definiert.

Die in Fig. 1, 7, 9 und 11 dargestellte erste Matrize 2 weist radial innen einen ersten Kern 5 mit einem ersten Innendurchmesser 6 und einem ersten Außendurchmesser 7 auf. Auf dem ersten Außendurchmesser 7 des ersten Kerns 5 ist mittels einer Presspassung ein erster Armierungsring 8 mit einem dritten Innendurchmesser 9 und einem dritten Außendurchmesser 10 angeordnet. Auf diesem ersten Armierungsring 8 ist wiederum ein zweiter Armierungsring 11 mit einem vierten Innendurchmesser 12 und einem vierten Außendurchmesser 13 angeordnet.

In Fig. 2, 8, 10 und 12 wurde aus dem Matrizenmodulsatz 1 eine andere Matrize 2 zusammengesetzt. Diese Matrize 2 weist anstelle des ersten Kerns 5 einen zweiten Kern 14 mit einem zweiten Innendurchmesser 15 und einem zweiten Außendurchmesser 16 auf. Der zweite Innendurchmesser 15 des zweiten Kerns 14 ist dabei größer als der erste Innendurchmesser 6 des ersten Kerns 5. Der zweite Außendurchmesser 16 des zweiten Kerns 14 ist größer als der erste Außendurchmesser 7 des ersten Kerns 5. Anhand der zwischen den Fig. 1 und 2 zur Veranschaulichung eingezeichneten Strichlinien 17 ist gut erkennbar, dass der zweite Außendurchmesser 16 des zweiten Kerns 14 dem dritten Außendurchmesser 10 des ersten Armierungsrings 8 entspricht. Dementsprechend ist also der erste Armierungsring 8 entfallen. Auf dem zweiten Kern 14 ist stattdessen mittels einer Presspassung der zweite Armierungsring 11 angeordnet.

In dieser Weise können also aus unterschiedlichen Modulen des Matrizenmodulsatzes 1 unterschiedliche Matrizen 2 zur Herstellung unterschiedlicher Werkstücke flexibel und schnell zusammengesetzt werden.

In den Fig. 1, 2, 7, 8, 11 und 12 ist weiterhin erkennbar, dass die Module unterschiedliche Dicken besitzen. Unter der Dicke ist dabei die Wandstärke des jeweiligen Rings zu verstehen - d. h. der Abstand zwischen dem Innendurchmesser und dem Außendurchmesser des jeweiligen Moduls auf einer Seite der Längsachse 3, die gleichzeitig die Symmetrieachse darstellt. Die Dicken sind dabei so gewählt, dass die Dicke der Armierungsringe 8, 11 mit ihrem Innendurchmesser 9, 12 und ihrem Außendurchmesser 10, 13 ansteigt. Dies bedeutet im vorliegenden Fall, dass die Dicke des zweiten Armierungsrings 11 größer ist als die Dicke des ersten Armierungsrings 8.

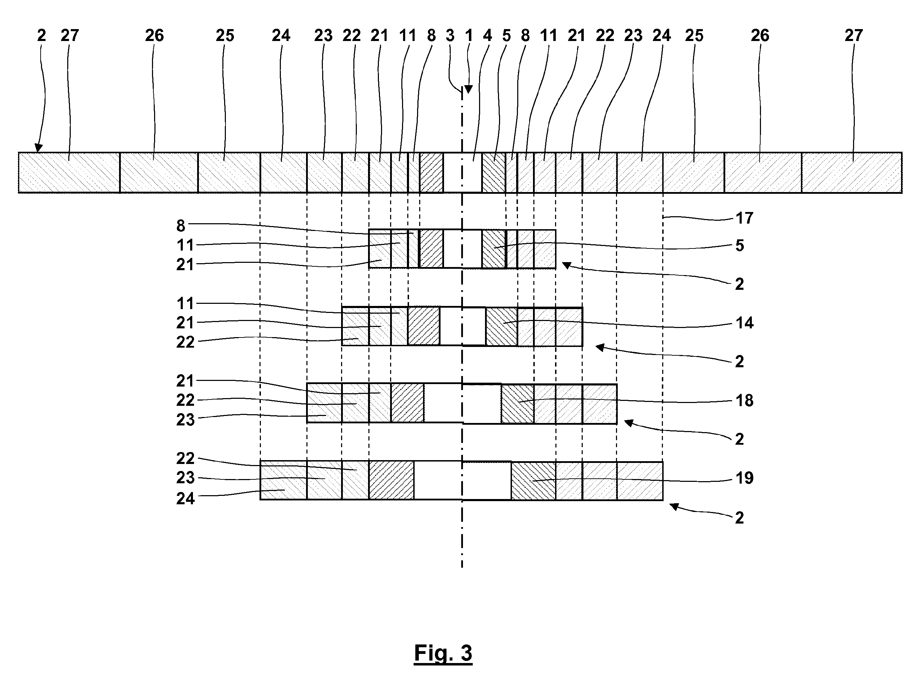

In **Fig. 3** ist ein weiterer beispielhafter Matrizenmodulsatz 1 dargestellt. Bei der ganz oben in Fig. 3 dargestellten Matrize 2 sind der kleinste Kern 5 und alle Armierungsringe verbaut. Bei den darunter dargestellten Matrizen 2 sind ein Teil dieser Armierungsringe radial außen nicht dargestellt. Diese Armierungsringe können bei allen in Fig. 3 dargestellten Matrizen 2 vorhanden sein oder auch nicht.

Fig. 3 verdeutlicht, dass der Matrizenmodulsatz 1 auch eine größere Anzahl unterschiedlicher Kerne und Armierungsringe aufweisen kann. Im vorliegenden Fall sind neben dem ersten Kern 5 und dem zweiten Kern 14 noch weitere Kerne 18 und 19 vorhanden. Neben den Armierungsringen 8 und 11 sind weitere Armierungsringe 21, 22, 23, 24, 25, 26 und 27 Teil des Matrizenmodulsatzes 1.

Die erste Matrize 2 weist den Kern 5 sowie die Armierungsringe 8, 11 und 21 auf. Die zweite Matrize 2 weist den Kern 14 und die Armierungsringe 11, 21 und 22 auf. Der Armierungsring 8 ist entfallen. Die dritte Matrize 2 weist den Kern 18 und die Armierungsringe 21, 22 und 23 auf. Der Armierungsring 11 ist entfallen. Die vierte Matrize 2 weist den Kern 19 und die Armierungsringe 22, 23 und 24 auf. Der Armierungsring 21 ist entfallen.

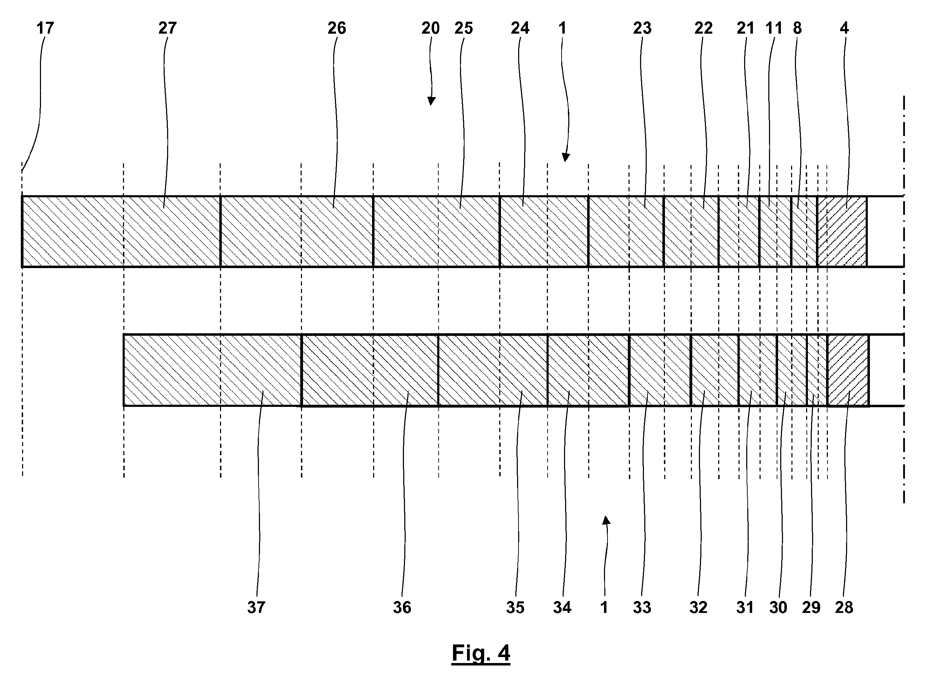

In **Fig. 4** ist ein Längsschnitt durch eine ersten beispielhaften Ausführungsform eines neuen Matrizenmodulsatzsets 20 mit zwei Matrizenmodulsatzsätzen 1 dargestellt. Aus Gründen der Darstellbarkeit bzw. Erkennbarkeit wurde dabei lediglich die linke Hälfte jenseits der Symmetrie- bzw. Längsachse 3 dargestellt. Das Matrizenmodulsatzset 20 weist zwei unterschiedliche Matrizenmodulsätze 1 auf. Der im oberen Bereich von Fig. 4 dargestellte Matrizenmodulsatz 1 stimmt mit dem in den Fig. 1, 2, 3, 7 und 8 dargestellten Matrizenmodulsatz 1 überein, so dass auf diesbezügliche weitere Erläuterungen verzichtet wird. Es versteht sich aber, dass dieselben Variationen hinsichtlich der Zusammensetzung unterschiedlicher Matrizen 2 im Rahmen dieses Matrizenmodulsatzes 1 möglich sind.

Anhand der Strichlinien 17 ist erkennbar, dass der im unteren Bereich von Fig. 4 dargestellte zweite Matrizenmodulsatz 2 einen Kern 28 mit einem übereinstimmenden Innendurchmesser, aber einem sich von dem Kern 5 unterscheidenden (kleineren) Außendurchmesser aufweist. Radial nach außen schließen sich dann Armierungsringe 29-37 an. Diese Armierungsringe 29-37 weisen andere Innen- und Außendurchmesser als die Armierungsringe 8, 11 und 21-27 auf. Dieses durch den Durchmesserversatz erzielte Rastermaß ist in etwa hälftig versetzt zum Rastermaß oder der Teilung des ersten Matrizenmodulsatzes 1 vorgesehen. Anders gesagt liegt ein Außendurchmesser eines Armierungsrings des zweiten Modulsatzsets 20 etwa mittig zwischen dem Innendurchmesser und dem Außendurchmesser eines korrespondierenden Armierungsrings des ersten Matrizenmodulsatzsets 20.

In **Fig. 5** ist ein Längsschnitt durch eine weitere beispielhafte Ausführungsform einer aus Modulen zusammengesetzten Matrize 2 dargestellt. In diesem Fall weist die Matrize 2 einen Kern 5 auf, der in axialer Richtung - d. h. in Richtung der Längsachse 3 - geteilt ausgebildet ist. Der Kern 5 weist drei Segmente 38, 39 und 40 auf. In diesem Fall weisen die beiden Segmente 39 und 40 einen übereinstimmenden Innendurchmesser auf, der sich von dem Innendurchmesser des anderen Segments 38 unterscheidet. Alle drei Segmente 38, 39, 40 weisen unterschiedliche Außendurchmesser auf. Zum Ausgleich dieser unterschiedlichen Außendurchmesser sind Füllringe 41, 42 vorhanden. Diese Füllringe 41, 42 sind als Armierungsringe ausgebildet. Sie überdecken sich teilweise radial mit dem Kern 5. Es schließen sich dann radial nach außen weitere Armierungsringe 43, 44 und 45 an.

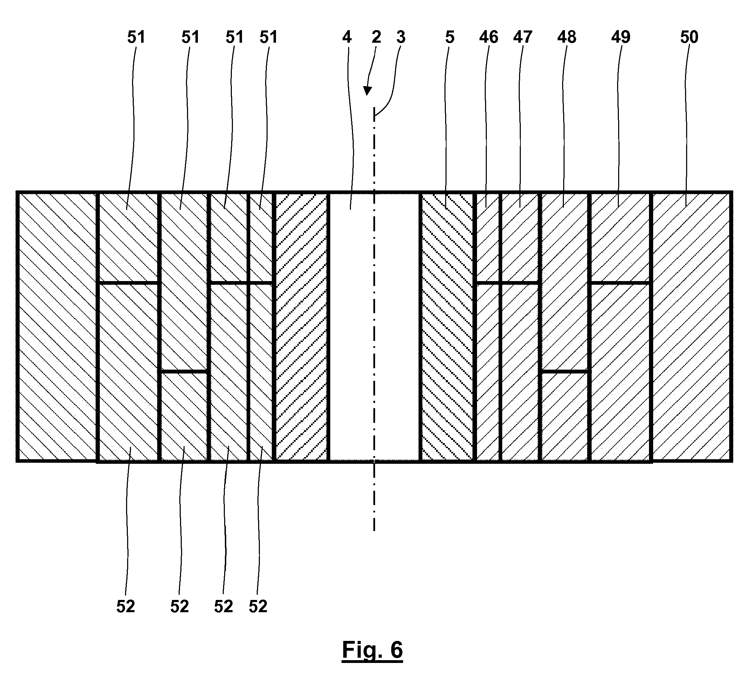

In **Fig. 6** ist ein Längsschnitt durch eine weitere beispielhaften Ausführungsform einer aus Modulen zusammengesetzten Matrize 2 dargestellt. In diesem Fall sind die Armierungsringe 46, 47, 48 und 49 jeweils in axialer Richtung geteilt. Sie weisen dementsprechend jeweils Segmente 51 und 52 auf. Diese Segmente 51, 52 überdecken sich nicht radial mit dem Kern 5.

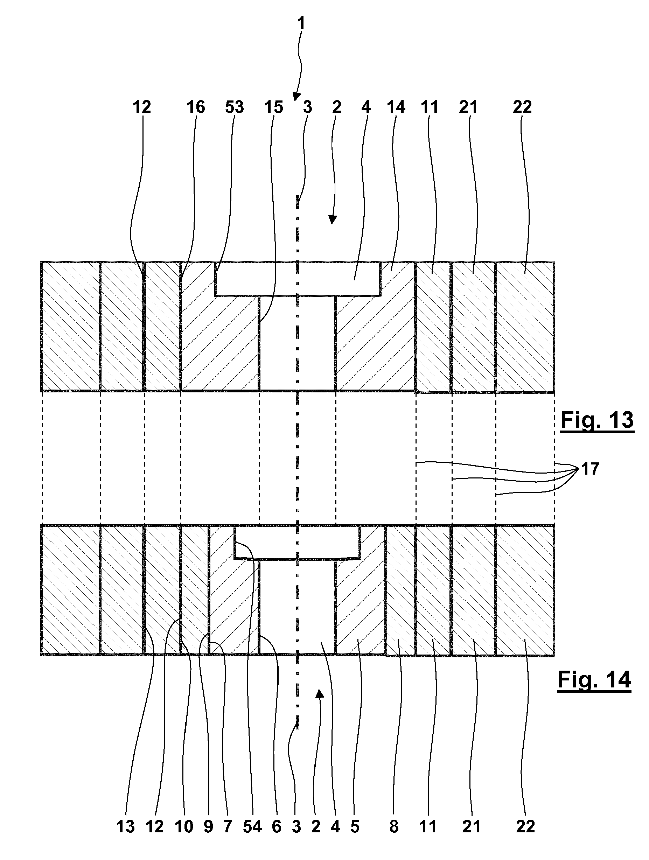

**Fig. 13** und **14** zeigen gemeinsam eine weitere beispielhafte Ausführungsform des neuen Matrizenmodulsatzes 1 für ein Presswerkzeug. Die Darstellung entspricht dabei der der Fig. 1 und 2, so dass diesbezüglich auf die oberhalb angegebenen Ausführungen verwiesen wird.

Im dargestellten Beispiel weist die in Fig. 13 dargestellte erste Matrize 2 den zweiten Kern 14 mit zwei unterschiedlichen Umformungsabschnitten auf. Im Bereich des ersten Umformungsabschnitts weist der Kern 14 den zweiten Innendurchmesser 15 auf. Dieser erstreckt sich aber nicht über die gesamte axiale Länge des Kerns 14. In dem zweiten Umformungsabschnitt besitzt der Kern 14 einen größeren Innendurchmesser 53. Die Bohrung 4 ist also gestuft ausgebildet.

Der durch den kleineren Innendurchmesser 15 gebildete Umformungsbereich dient dabei insbesondere zum Umformen des Schafts einer Schraube. Der durch den größeren Innendurchmesser 53 gebildete Umformungsbereich dient insbesondere zum Ausbilden des Kopfs der Schraube.

Die hier dargestellte Matrize 2 weist neben dem innen gestuft ausgebildeten Kern 14 weiterhin die Armierungsringe 11, 21 und 22 auf.

Die in Fig. 14 dargestellte Matrize 2 weist den hier ebenfalls innen gestuft ausgebildeten Kern 5 sowie die Armierungsringe 8, 11, 21 und 22 auf. Der hier den ersten Umformungsbereich definierende Innendurchmesser 6 stimmt dabei mit dem Innendurchmesser 15 überein. Der den zweiten Umformungsbereich definierende Innendurchmesser 54 hingegen ist größer als der Innendurchmesser 53. Hierdurch kann mit diesem Kern 5 eine Schraube mit einem im Vergleich zu Fig. 13 übereinstimmenden Schaft, aber einem Kopf mit einem größeren Außendurchmesser hergestellt werden.

In **Fig. 15** ist eine perspektivische Ansicht eines Längsschnitts durch eine weitere beispielhafte Ausführungsform einer aus Modulen zusammengesetzten Matrize 2 gezeigt. Der Kern 5 ist hier axial geteilt und weist die Segmente 38, 39 und 40 auf. Die Segmente 38, 39 und 40 weisen hier die unterschiedlichen Innendurchmesser 6 und 53 auf. Sie könnten aber auch übereinstimmende Innendurchmesser aufweisen. Das Segment 39 ist hier als Übergangsstück ausgebildet, in dem der Durchmessersprung realisiert ist.

Die Segmente 38, 39 und 40 weisen nicht nur unterschiedliche Innendurchmesser, sondern auch unterschiedliche Außendurchmesser auf. Sie könnten aber auch übereinstimmende Außendurchmesser besitzen. Die Außendurchmesser sind so gewählt, dass sie das Bildungsgesetz des Matrizenmodulsatzes 1 erfüllen. Dies bedeutet u. a., dass auch axial geteilte Armierungsringe benutzt werden. So werden die Segmente 38, 39, 40 innerhalb des modularen Systems mit unterschiedlichen Armierungsringen des modularen Systems kombiniert. Im dargestellten Beispiel weist der Armierungsring 8 dabei die Segmente 55, 56 und 57 auf. Radial nach außen schließen sich dann die Armierungsringe 11 und 21 an.

Diese unterschiedlichen Kerne und Armierungsringe können also nicht nur in unterschiedlichen Kombinationen zum Aufbau unterschiedlicher Matrizen 2, sondern auch gemeinsam in einer aus Segmenten bestehenden Matrize 2 benutzt werden. In dieser Weise kann auf Basis der Module des Matrizenmodulsatzes 1 eine Vielzahl unterschiedlicher Presswerkzeuge flexibel hergestellt werden.

### BEZUGSZEICHENLISTE

- 1: Matrizenmodulsatz
- 2: Matrize
- 3: Längsachse
- 4: Bohrung
- 5: Erster Kern
- 6: Erster Innendurchmesser
- 7: Erster Außendurchmesser
- 8: Erster Armierungsring
- 9: Dritter Innendurchmesser
- 10: Dritter Außendurchmesser
- 11: Zweiter Armierungsring
- 12: Vierter Innendurchmesser
- 13: Vierter Außendurchmesser
- 14: Zweiter Kern
- 15: Zweiter Innendurchmesser
- 16: Zweiter Außendurchmesser
- 17: Strichlinie
- 18: Kern
- 19: Kern
- 20: Matrizenmodulsatzset
- 21: Armierungsring
- 22: Armierungsring
- 23: Armierungsring
- 24: Armierungsring
- 25: Armierungsring
- 26: Armierungsring
- 27: Armierungsring
- 28: Kern
- 29: Armierungsring
- 30: Armierungsring
- 31: Armierungsring
- 32: Armierungsring
- 33: Armierungsring
- 34: Armierungsring
- 35: Armierungsring
- 36: Armierungsring
- 37: Armierungsring
- 38: Segment
- 39: Segment
- 40: Segment
- 41: Füllring
- 42: Füllring
- 43: Armierungsring
- 44: Armierungsring
- 45: Armierungsring
- 46: Armierungsring
- 47: Armierungsring
- 48: Armierungsring
- 49: Armierungsring
- 50: Armierungsring
- 51: Segment
- 52: Segment
- 53: Innendurchmesser
- 54: Innendurchmesser
- 55: Segment
- 56: Segment
- 57: Segment

## Patentansprüche

1. Matrizenmodulsatz (1) für ein Presswerkzeug, mit zwei unterschiedlichen Kernen (5, 14) und zwei unterschiedlichen Armierungsringen (8, 11), die so aufeinander abgestimmt ausgebildet sind, dass aus ihnen eine erste Matrize (2) mit einem Kern (5) und den Armierungsringen (8, 11) oder alternativ eine zweite Matrize (2) mit dem anderen Kern (14) und nur einem der Armierungsringe (11) zusammenfügbar ist.

2. Matrizenmodulsatz (1) nach Anspruch 1, **dadurch gekennzeichnet, dass**
der erste Kern (5) einen ersten Innendurchmesser (6) und einen ersten Außendurchmesser (7) aufweist,
der zweite Kern (14) einen zweiten Innendurchmesser (15) und einen zweiten Außendurchmesser (16) aufweist, wobei der zweite Außendurchmesser (16) des zweiten Kerns (14) größer als der erste Außendurchmesser (7) des ersten Kerns (5) ist,
der erste Armierungsring (8) einen dritten Innendurchmesser (9) und einen dritten Außendurchmesser (10) aufweist, wobei der dritte Außendurchmesser (10) des ersten Armierungsrings (8) gleich dem zweiten Außendurchmesser (16) des zweiten Kerns (14) ist; und
der zweite Armierungsring (11) einen vierten Innendurchmesser (12) und einem vierten Außendurchmesser (13) aufweist, wobei
der erste Außendurchmesser (7) des ersten Kerns (5) und der dritte Innendurchmesser (9) des ersten Armierungsrings (8) sowie der dritte Außendurchmesser (10) des ersten Armierungsrings (8) und der vierte Innendurchmesser (12) des zweiten Armierungsrings (11) so aufeinander abgestimmt sind, dass die erste Matrize (2) mit dem ersten Kern (5), dem ersten Armierungsring (8) und dem zweiten Armierungsring (11) zusammenfügbar ist, und
der zweite Außendurchmesser (16) des zweiten Kerns (14) und der vierte Innendurchmesser (12) des zweiten Armierungsrings (11) so aufeinander abgestimmt sind, dass alternativ die zweite Matrize (2) mit dem zweiten Kern (14) und dem zweiten Armierungsring (11), aber ohne den ersten Armierungsring (8) zusammenfügbar ist.

3. Matrizenmodulsatz (1) nach Anspruch 1 oder 2, **dadurch gekennzeichnet, dass** der zweite Innendurchmesser (15) des zweiten Kerns (14) größer als der erste Innendurchmesser (6) des ersten Kerns (5) ist.

4. Matrizenmodulsatz (1) nach mindestens einem der vorhergehenden Ansprüche, **dadurch gekennzeichnet, dass**
der Außendurchmesser (7) eines Kerns (5) und der Innendurchmesser (9) eines Armierungsrings (8) so aufeinander abgestimmt sind, dass sie zur Bildung einer Presspassung miteinander verbindbar sind, und/oder
der Außendurchmesser eines Armierungsrings und der Innendurchmesser eines anderen Armierungsrings so aufeinander abgestimmt sind, dass sie zur Bildung einer Presspassung miteinander verbindbar sind.

5. Matrizenmodulsatz (1) nach mindestens einem der vorhergehenden Ansprüche, **dadurch gekennzeichnet, dass** die Dicke der Armierungsringe (8, 11) mit ihrem Innendurchmesser (9, 12) und/oder Außendurchmesser (10, 13) ansteigt.

6. Matrizenmodulsatz (1) nach mindestens einem der vorhergehenden Ansprüche, **dadurch gekennzeichnet, dass** das Verhältnis der Dicke zum Innendurchmesser (9, 12) der Armierungsringe (8, 11) zwischen etwa 5 und 25 % liegt.

7. Matrizenmodulsatz (1) nach mindestens einem der vorhergehenden Ansprüche, **dadurch gekennzeichnet, dass** die Kerne (5, 14) mehrere in axialer Richtung geteilte Segmente (38, 39, 40) aufweisen.

8. Matrizenmodulsatz (1) nach mindestens einem der vorhergehenden Ansprüche, **gekennzeichnet durch** drei unterschiedliche Kerne (5, 14, 18) und drei unterschiedliche Armierungsringe (8, 11, 21).

9. Matrizenmodulsatz (1) nach Anspruch 8, **dadurch gekennzeichnet, dass**
die drei Kerne (5, 14, 18) unterschiedliche Innendurchmesser (6, 15) und unterschiedliche Außendurchmesser (7, 16) aufweisen, und
die drei Armierungsringe (8, 11, 21) unterschiedliche Innendurchmesser (9, 12) und unterschiedliche Außendurchmesser (10, 13) aufweisen.

10. Matrizenmodulsatz (1) nach mindestens einem der vorhergehenden Ansprüche, **dadurch gekennzeichnet, dass** die Matrizen (2) Kaltfließpresswerkzeugmatrizen einer maschinenangetriebenen Presse sind.

11. Matrizenmodulsatz (1) nach mindestens einem der vorhergehenden Ansprüche, **dadurch gekennzeichnet, dass** die Matrizen (2) zum Herstellen von Schrauben ausgebildet sind.

12. Matrizenmodulsatzset (20) für ein Presswerkzeug, mit
einem ersten Matrizenmodulsatz (1) nach mindestens einem der vorhergehenden Ansprüche; und
einem zweiten Matrizenmodulsatz (1) nach mindestens einem der vorhergehenden Ansprüche, wobei die Kerne (28) und die Armierungsringe (29, 30) des zweiten Matrizenmodulsatzes (1) unterschiedlich zu den Kernen (5, 14) und Armierungsringen (8, 11) des ersten Matrizenmodulsatzes (1) ausgebildet sind.

13. Matrizenmodulsatzset (20) nach Anspruch 12, **dadurch gekennzeichnet, dass**
die Kerne (28) und die Armierungsringe (29, 30) des zweiten Matrizenmodulsatzes andere Außendurchmesser als die Kerne (5, 14) und Armierungsringe (8, 11) des ersten Matrizenmodulsatzes (1) aufweisen; und/oder
die Kerne (28) und die Armierungsringe (29, 30) des zweiten Matrizenmodulsatzes (1) andere Innendurchmesser als die Kerne (5, 14) und Armierungsringe (8, 11) des ersten Matrizenmodulsatzes (1) aufweisen.

14. Matrizenmodulsatzset (20) nach Anspruch 12 oder 13, **gekennzeichnet durch** einen dritten Matrizenmodulsatz (1) nach mindestens einem der Ansprüche 1 bis 11, wobei die Kerne und die Armierungsringe des dritten Matrizenmodulsatzes (1) unterschiedlich zu den Kernen (5, 14) und Armierungsringen (8, 11) des ersten Matrizenmodulsatzes (1) und des zweiten Matrizenmodulsatzes (1) ausgebildet sind.

## Claims

1. A die module set (1) for a pressing tool, comprising two different cores (5, 14) and two different reinforcement rings (8, 11) being designed to be coordinated in a way that a first die (2) including a first core (5) and the reinforcement rings (8, 11) or alternatively a second die (2) including the other core (14) and only one of the reinforcement rings (11) can be composed thereof.

2. The die module set (1) of claim 1, **characterised in that**
the first core (5) has a first inner diameter (6) and a first outer diameter (7),
the second core (14) has a second inner diameter (15) and a second outer diameter (16), the second outer diameter (16) of the second core (14) being greater than the first outer diameter (7) of the first core (5),
the first reinforcement ring (8) has a third inner diameter (9) and a third outer diameter (10), the third outer diameter (10) of the first reinforcement ring (8) being identical to the second outer diameter (16) of the second core (14), and
the second reinforcement ring (11) has a fourth inner diameter (12) and a fourth outer diameter (13), wherein
the first outer diameter (7) of the first core (5) and the third inner diameter (9) of the first reinforcement ring (8) as well as the third outer diameter (10) of the first reinforcement ring (8) and the fourth inner diameter (12) of the second reinforcement ring (11) are coordinated in a way that the first die (2) including the first core (5), the first reinforcement ring (8) and the second reinforcement ring (11) can be composed thereof, and
the second outer diameter (16) of the second core (14) and the fourth inner diameter (12) of the second reinforcement ring (11) are coordinated in a way that alternatively a second die (2) including the second core (14) and the second reinforcement ring (11), but not the first reinforcement ring (8), can be composed thereof.

3. The die module set (1) of claim 1 or 2, **characterised in that** the second inner diameter (15) of the second core (14) is greater than the first inner diameter (6) of the first core (5).

4. The die module set (1) of at least one of the preceding claims, **characterised in that**
the outer diameter (7) of a core (5) and the inner diameter (9) of a reinforcement ring (8) are coordinated in a way that they can be connected to one another by forming a press fit, and/or
the outer diameter of a reinforcement ring and the inner diameter of a different reinforcement ring are coordinated in a way that they can be connected to one another by forming a press fit.

5. The die module set (1) of at least one of the preceding claims, **characterised in that** the thickness of the reinforcement rings (8, 11) increases with their inner diameter (9, 12) and/or outer diameter (10, 13).

6. The die module set (1) of at least one of the preceding claims, **characterised in that** the ratio between the thickness and the inner diameter (9, 12) of the reinforcement rings (8, 11) is between approximately 5 and 25 %.

7. The die module set (1) of at least one of the preceding claims, **characterised in that** the cores (5, 14) include a plurality of segments (38, 39, 40) being divided in an axial direction.

8. The die module set (1) of at least one of the preceding claims, **characterised by** three different cores (5, 14, 18) and three different reinforcement rings (8, 11, 21).

9. The die module set (1) of claim 8, **characterised in that**
the three cores (5, 14, 18) have different inner diameters (6, 15) and different outer diameters (7, 16), and
the three reinforcement rings (8, 11, 21) have different inner diameters (9, 12) and different outer diameters (10, 13).

10. The die module set (1) of at least one of the preceding claims, **characterised in that** the dies (2) are cold extrusion dies of a machine-driven press.

11. The die module set (1) of at least one of the preceding claims, **characterised in that** the dies (2) are designed to produce screws.

12. A die module set kit (20) for a pressing tool, comprising:
a first die module set (1) of at least one of the preceding claims; and
a second die module set (1) of at least one of the preceding claims, the cores (28) and the reinforcement rings (29, 30) of the second die module set (1) being designed to be different than the cores (5, 14) and the reinforcement rings (8, 11) of the first die module set (1).

13. The die module set kit (20) of claim 12, **characterised in that**
the cores (28) and the reinforcement rings (29, 30) of the second die module set have other outer diameters than the cores (5, 14) and the reinforcement rings (8, 11) of the first die module set (1); and/or
the cores (28) and the reinforcement rings (29, 30) of the second die module set (1) have other inner diameters than the cores (5, 14) and the reinforcement rings (8, 11) of the first die module set (1).

14. The die module set kit (20) of claim 12 or 13, **characterised by** a third die module set of at least one of claims 1 to 11, the cores and the reinforcement rings of the third die module set (1) being designed to be different than the cores (5, 14) and the reinforcement rings (8, 11) of the first die module set (1) and of the second die module set (1).

## Revendications

1. Ensemble modulaire matriciel (1) pour un outil de presse, avec deux noyaux (5, 14) différents et deux anneaux d'armature (8, 11) différents, qui sont conçus de manière harmonisée entre eux, de façon à ce que, à partir de ceux-ci, une première matrice (2) peut être assemblée avec un noyau (5) et les anneaux d'armature (8, 11) ou en variante une deuxième matrice (2) avec l'autre noyau (14) et seulement un des anneaux d'armature (11).

2. Ensemble modulaire matriciel (1) **caractérisé en ce que**
le premier noyau (5) présente un premier diamètre intérieur (6) et un premier diamètre extérieur (7),
le deuxième noyau (14) présente un deuxième diamètre intérieur (15) et un deuxième diamètre extérieur (16), le deuxième diamètre extérieur (16) du deuxième noyau (14) étant supérieur au premier diamètre extérieur (7) du premier noyau (5),
le premier anneau d'armature (8) présente un troisième diamètre intérieur (9) et un troisième diamètre extérieur (10), le troisième diamètre extérieur (10) du premier anneau d'armature (8) étant égal au deuxième diamètre extérieur (16) du deuxième noyau (14); et
le deuxième anneau d'armature (11) présente un quatrième diamètre intérieur (12) et un quatrième diamètre extérieur (13),
le premier diamètre extérieur (7) du premier noyau (5) et le troisième diamètre intégra (9) du premier anneau d'armature (8) ainsi que le troisième diamètre extérieur (10) du premier anneau d'armature (8) et le quatrième diamètre intérieur (12) du deuxième anneau d'armature (11) étant adaptés l'un à l'autre de façon à ce que la première matrice (2) puisse être assemblée avec le premier noyau (5), le premier anneau d'armature (8) et le deuxième anneau d'armature (11), et
le deuxième diamètre extérieur (16) du deuxième noyau (14) et le quatrième diamètre intérieur (12) du deuxième anneau d'armature (11) étant adaptés l'un à l'autre de façon à ce que, en variante, la deuxième matrice (2) peut être assemblée avec le deuxième noyau (14) et le deuxième anneau d'armature (11) mais sans le premier anneau d'armature (8).

3. Ensemble modulaire matriciel (1) selon la revendication 1 ou 2, **caractérisé en ce que** le deuxième diamètre intérieur (15) du deuxième noyau (14) est supérieur au premier diamètre intérieur (6) du premier noyau (5).

4. Ensemble modulaire matriciel (1) selon au moins une des revendications précédentes, **caractérisé en ce que**
le diamètre extérieur (7) d'un noyau (5) et le diamètre intérieur (9) d'un anneau d'armature (8) sont adaptés l'un à l'autre de façon à ce qu'ils puissent être reliés entre eux pour la formation d'un ajustement serré et/ou
le diamètre extérieur d'un anneau d'armature et le diamètre intérieur d'un autre anneau d'armature sont adaptés l'un à l'autre de façon à ce qu'ils puissent être reliés entre eux pour la formation d'un ajustement serré.

5. Ensemble modulaire matriciel (1) selon au moins une des revendications précédentes, **caractérisé en ce que** l'épaisseur de l'anneau d'armature (8, 11) augmente avec son diamètre intérieur (9, 12) et/ou son diamètre extérieur (10, 13).

6. Ensemble modulaire matriciel (1) selon au moins une des revendications précédentes, **caractérisé en ce que** le rapport entre l'épaisseur et le diamètre intérieur (9, 12) des anneaux d'armature (8, 11) est d'environ 5 à 25 %.

7. Ensemble modulaire matriciel (1) selon au moins une des revendications précédentes, **caractérisé en ce que** les noyaux (5, 14) comprennent plusieurs segments (38, 39, 40) divisés dans la direction axiale.

8. Ensemble modulaire matriciel (1) selon au moins une des revendications précédentes, **caractérisé par** trois noyaux (5, 14, 18) différents et trois anneaux d'armature (8, 11, 21) différents.

9. Ensemble modulaire matriciel (1) selon la revendication 8, **caractérisé en ce que**
les trois noyaux (5, 14, 18) présentent des diamètres intérieurs (6, 15) différents et des diamètres extérieurs (7, 16) différents et
les trois anneaux d'armature (8, 11, 21) présentent des diamètres intérieurs (9, 12) différents et des diamètres extérieurs (10, 13) différents.

10. Ensemble modulaire matriciel (1) selon au moins une des revendications précédentes, **caractérisé en ce que** les matrices (2) sont des matrices d'outils de presse pour extrusion à froid d'une presse entraînée mécaniquement.

11. Ensemble modulaire matriciel (1) selon au moins une des revendications précédentes, **caractérisé en ce que** les matrices (2) sont conçues pour la fabrication de vis.

12. Jeu d'ensembles modulaires matriciels (20) pour un outil de presse avec
un premier ensemble modulaire matriciel (1) selon au moins une des revendications précédentes; et
un deuxième ensemble modulaire matriciel (1) selon au moins une des revendications précédentes, les noyaux (28) et les anneaux d'armature (29, 30) du deuxième ensemble modulaire matriciel (1) étant conçus différemment des noyaux (5, 14) et des anneaux d'armature (8, 11) du premier ensemble modulaire matriciel (1).

13. Jeu d'ensembles modulaires matriciels (20) selon la revendication 12, **caractérisé en ce que**
les noyaux (28) et les anneaux d'armature (29, 30) du deuxième ensemble modulaire matriciel présentent des diamètres extérieurs différents des noyaux (5, 14) et des anneaux d'armature (8, 11) du premier ensemble modulaire matriciel (1); et/ou
les noyaux (28) et les anneaux d'armature (29, 30) du deuxième ensemble modulaire matriciel (1) présentent des diamètres intérieurs différents des noyaux (5, 14) et des anneaux d'armature (8, 11) du premier ensemble modulaire matriciel (1).

14. Jeu d'ensembles modulaires matriciels (20) selon la revendication 12 ou 13, **caractérisé par** un troisième ensemble modulaire matriciel (1) selon au moins une des revendications 1 à 11, les noyaux et les anneaux d'armature du troisième ensemble modulaire matriciel (1) étant conçu différemment des noyaux (5, 14) et des anneaux d'armature (8, 11) du premier ensemble modulaire matriciel (1) et du deuxième ensemble modulaire matriciel (1).
